# EUROPEAN PATENT APPLICATION

(11) **EP 2 628 997 A1**
(43) Date of publication of application: **21.08.2013**
(21) Application number: 11819146.9
(22) Date of filing: 29.08.2011
(51) Int. Cl.: F21S 2/00, F21V 8/00

(54) **LIGHT IRRADIATION DEVICE, SIMULATED SUNLIGHT LIGHT IRRADIATION DEVICE, AND INSPECTION DEVICE FOR SOLAR CELL PANEL**

(30) Priority: 08.10.2010 JP 2010229122
(71) Applicant: Sharp Kabushiki Kaisha, Osaka-shi Osaka 545-8522 (JP)
(72) Inventor: MINAMI, Kohji, Osaka-shi, Osaka 545-8522 (JP); TADANO, Hiroyuki, Osaka-shi, Osaka 545-8522 (JP)
(74) Representative: Müller - Hoffmann & Partner
(86) International application number: PCT/JP2011/004800
(87) International publication number: WO 2012/046376

(57) **Abstract**

The degradation of directivity performance due to stray light with poor directivity entering and propagating through tapered light guiding members can be prevented, and thus the decrease in the degree of spectrum correspondence with sunlight can be prevented. A light shielding member **41** is placed in between adjacent tapered light guiding members **4.** Specifically, the light shielding member **41** is attached to or coiled around the surface of a circumference wall of the tapered light guiding member **4,** other than one end surface and the other end surface for allowing light to enter and exit. Further, the light shielding member **41** is placed so that stray light will not enter the tapered light guiding member **4** from the circumferential wall thereof, other than the one end surface and the other end surface.

## Description

### TECHNICAL FIELD

The present invention relates to a light irradiation apparatus for emitting light with high directivity to a subject to be irradiated, a pseudo-sunlight irradiation apparatus for emitting pseudo-sunlight onto the subject to be irradiated using the light irradiation apparatus, and a solar panel inspection apparatus for measuring an output characteristic of a solar panel to determine quality, using the pseudo-sunlight irradiation apparatus.

### BACKGROUND ART

In a conventional pseudo-sunlight irradiation apparatus for use as a light source apparatus for reproducing the spectral distribution of sunlight with high precision, an attempt has been conventionally made to unify the illuminance distribution on a measurement subject by lighting a xenon lamp to let pseudo-sunlight passing through an optical filter (air mass filter) undergo diffuse reflection with a reflection plate to obtain light having a desired spectrum.

Output light from a lamp light source is allowed to propagate inside a tapered light guiding member to produce parallel light with high directivity, and the parallel light with high directivity is used for irradiation, as area-irradiation, for the subject to be irradiated.

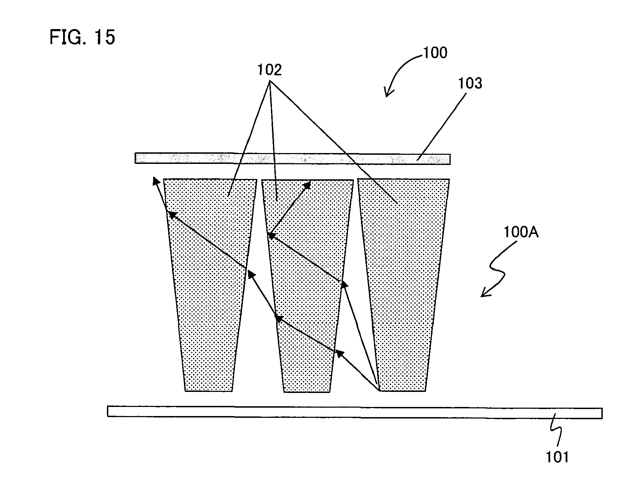

Figure **15** is a longitudinal cross sectional view schematically illustrating a structural example of an important part of a conventional light irradiation apparatus disclosed in Patent Literature 1. This is a longitudinal cross sectional view illustrating a case where light is introduced from a lamp light source into a tapered light guiding member.

As illustrated in Figure **15****,** Patent Literature 1 discloses, as a conventional light irradiation apparatus **100,** an optical system for reflecting and gathering output light of a lamp **101** using a reflection mirror (reflector) (not shown), and introducing the reflection light into a tapered light guiding member **102** for increasing directivity, from a bottom end surface. After the directivity is controlled, the light introduced into the tapered light guiding member **102** is taken from a top end surface of the tapered light guiding member **102** as an irradiation surface, through an air mass filter for adjusting a spectrum.

Patent Literature 1 also describes that, utilizing a reflection box (not shown), output light from the lamp **101** reflects a number of times within the reflection box (not shown) and then the light comes out of a top aperture section to be introduced into the tapered light guiding member **102.** Patent Literature 1 also describes a circumferential portion of the tapered light guiding member **102** for increasing directivity with a transparent member with a different refraction index from that of the material for the tapered light guiding member in order to increase the effect of confining light within.

When a light shielding structure for preventing light from escaping, such as the reflection box (not shown) for housing the lamp light source **101** as described above, is used, the inside of the reflection box (not shown) becomes abnormally hot if the lamp light source **101** is with a heat source of a halogen light, in particular. Because of this, the performance of an inner surface coating portion of the reflection box (not shown) for reflecting light may be changed, and thus there is a possibility of the spectra of emitted light to be largely changed.

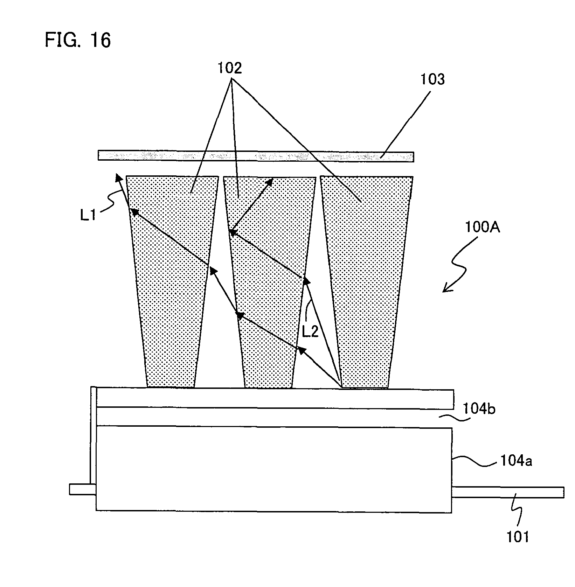

Thus, in a case of a halogen lamp, since the temperature gets high, the periphery of the halogen lamp cannot be covered. Also, in a case of a xenon lamp, since it uses pulsed light emission and the rise in the temperature is not significant, it is possible to provide and surround the xenon lamp with an aperture plate for reflecting light with an inner surface thereof in front of a reflection mirror (reflector). A case where an opening for heat release is provided in between a reflector and an aperture plate is illustrated in Figure **16****.**

Figure **16** is a longitudinal cross sectional view schematically illustrating a structural example of another important part of a conventional light irradiation apparatus. This is a longitudinal cross sectional view illustrating a case where a lamp light source is housed within a reflector and light is introduced into a tapered light guiding member from an aperture section of an aperture plate placed in front of the reflector.

As illustrated in Figure **16****,** a conventional light irradiation apparatus **100A** is constituted of a reflector **104a** for housing a lamp light source **101** of a xenon lamp, and an aperture plate **104b** in front of the reflector **104a.** An opening **104c** for heat release is provided in between the reflector **104a** and the aperture plate **104b.** Onto the aperture plate **104b,** output light from the lamp light source **101** reflects off the reflector **104a** to the front. The output light with favorable directivity from the aperture section of the aperture plate **104b** in front of the reflector **104a** is taken into the tapered light guiding member **102** for further increasing the directivity from the bottom end surface thereof. In this case, the aperture section of the aperture plate **104b** and the bottom end surface of the tapered light guiding member **102** are placed closely facing each other.

### [Citation List]

### [Patent Literature]

Patent Literature 1: Japanese Laid-Open Publication No. 2003-98354

### SUMMARY OF INVENTION

### [Technical Problem]

In the conventional light irradiation apparatus above, there is a slight opening between the reflector (not shown) of the lamp light source **101** and the bottom end surface of the tapered light guiding member **102** as illustrated in Figure **15****,** or between the aperture section of the aperture plate **104b** and the bottom end surface of the tapered light guiding member **102** as illustrated in Figure **16****.** Stray light **L1** and **L2** with poor directivity escaping from the opening are not introduced into the tapered light guiding member **102** and the stray light **L1** and **L2** escape from the periphery thereof. The efficiency of taking in light is better with a flat surface of the bottom end surface of the tapered light guiding member **102.** Thus, an opening is created between the curved surface of the front surface of the aperture plate **104b** and the flat surface of the bottom end surface of the tapered light guiding member **102.**

Because of this, the stray light **L1** and **L2** with poor directivity, escaping from the periphery of the bottom end portion of the tapered light guiding member **102** towards the exterior, are introduced into another tapered light guiding member **102** next to the other from a side wall thereof. The stray light **L1** and **L2** with poor directivity introduced into the tapered light guiding member **102** may further escape to the outside like the stray light **L1,** or may reflect off and propagate within the tapered light guiding member **102** like the stray light **L2.** In such a case, a problem occurs where the directivity performance deteriorates due to the stray light **L2,** and the original degree of spectrum correspondence with sunlight for a pseudo-sunlight irradiation apparatus.

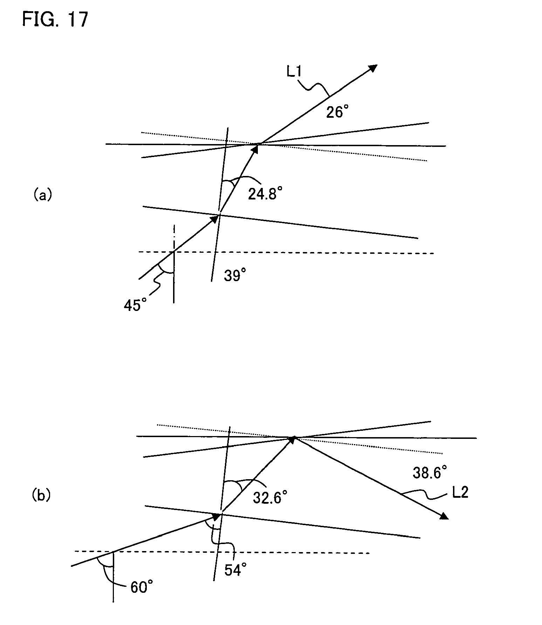

Figure **17** is a diagram illustrating stray light **L1** and **L2** with poor directivity escaping from openings in Figures **15** and **16****.** Figure **17 (a)** illustrates a light passing course of stray light passing through a tapered light guiding member without being trapped by the tapered light guiding member. Figure **17(b)** illustrates a light passing course of stray light propagating through a tapered light guiding member by being trapped within the tapered light guiding member, causing the directivity to be degraded.

The present invention is intended to solve the conventional problems described above. An objective of the present invention is to provide: a light irradiation apparatus capable of preventing the degree of spectrum correspondence with sunlight from being decreased by preventing stray light with poor directivity from entering and propagating through tapered light guiding member to degrade the directivity performance; a pseudo-sunlight irradiation apparatus for emitting pseudo-sunlight onto the subject to be irradiated using the light irradiation apparatus; and a solar panel inspection apparatus for measuring an output characteristic of a solar panel to determine quality, using the pseudo-sunlight irradiation apparatus.

### [Solution to Problem]

A light irradiation apparatus according to the present invention comprises: a light source; a light guiding member for taking output light from the light source into one end surface and outputting light with increased directivity from another end surface thereof; and an optical filter for adjusting a spectrum of the light output from the other end surface of the light guiding member, where the light guiding member includes a light shielding member placed so that stray light will not enter a circumferential wall but only the one end surface and the other end surface, thereby achieving the objective described above.

Preferably, in a light irradiation apparatus according to the present invention, the light shielding member protrudes from a circumferential end of the one end surface of the light guiding member towards the light source, in such a manner to surround the one end surface.

Still preferably, a light irradiation apparatus according to the present invention further comprises a reflector for housing the light source and reflecting the output light from the light source towards a predetermined direction, where the light shielding member is placed in such a manner to surround an opening in between the side closer to an aperture section of the reflector and the one end surface of the light guiding member.

A pseudo-sunlight irradiation apparatus according to the present invention comprises an area-irradiating, light guiding member for taking pseudo-sunlight from the light irradiation apparatus according to any of claims 1 to 3 into the one end surface, allowing the pseudo-sunlight to propagate through the inside of the light guiding member, and emits light with high directivity uniformly as area irradiation from a flat surface onto an irradiation subject, thereby achieving the objective described above.

A pseudo-sunlight irradiation apparatus according to the present invention comprises a plurality of sets provided therein of: a first light irradiation apparatus comprising: a first light source; a first light guiding member for taking output light from the first light source into one end surface and outputting the light with increased directivity from another end surface thereof; and a first optical filter for adjusting a spectrum of the light output from the other end surface of the first light guiding member; a second light irradiation apparatus comprising: a second light source; a second light guiding member for taking output light from the second light source into one end surface and outputting the light with increased directivity from another end surface thereof; and a second optical filter for adjusting a spectrum of the light output from the other end surface of the second light guiding member; and a third light irradiation apparatus comprising: a light mixing member for mixing light from the first light irradiation apparatus and light from the second light irradiation apparatus to obtain pseudo-sunlight similar to sunlight; and a third light guiding member for taking the pseudo-sunlight from the light mixing member, into one end surface, allowing the pseudo-sunlight to propagate through the inside thereof and emitting light with high directivity onto an irradiation subject from a flat surface thereof uniformly as area irradiation, where the first light guiding members all together are arrayed adjacently and the second light guiding members all together are arrayed adjacently, and where a light shielding member is placed in between the adjacent first light guiding members and/or the adjacent second light guiding members, thereby achieving the objective described above.

Preferably, a pseudo-sunlight irradiation apparatus according to the present invention further comprises: a member for fixing the first light guiding member; and a member for fixing the second light guiding member, where the light shielding member is attached to a surface facing the first light guiding member and/or the second light guiding member, of the member for fixing the first light guiding member and/or the member for fixing the second light guiding member.

Still preferably, a pseudo-sunlight irradiation apparatus according to the present invention further comprises reflectors for housing the first light source and the second light source respectively and reflecting output light from the first light source and the second light source respectively in a predetermined direction, where the light shielding member is placed in such a manner to shield light of at least an area facing another adjacent light guiding member, of a space in between an aperture section side of each of the reflectors and one end surface of the first light guiding member.

A solar panel inspection apparatus according to the present invention is for measuring an output characteristic of a solar panel to determine quality, using the pseudo-sunlight irradiation apparatus according to the present invention, thereby achieving the objective described above.

With the structure described above, the function of the present invention will be described hereinafter.

Since a light shielding member is placed in between adjacent light guiding members, stray light will not enter the light guiding members through the circumferential walls thereof, but only from one end surfaces and the other end surfaces. Thus, the degradation of directivity performance due to stray light, with poor directivity, entering and propagating through the tapered light guiding members, can be prevented, and thus the decrease in the degree of spectrum correspondence with sunlight can be prevented.

### [Advantageous Effects of Invention]

According to the present invention with the structure described above, a light shielding member is placed in between adjacent first light guiding members and/or adjacent second light guiding members, so that degradation of directivity performance due to stray light with poor directivity, entering and propagating through the tapered light guiding members, can be prevented, and thus the decrease in the degree of spectrum correspondence with sunlight can be prevented.

### BRIEF DESCRIPTION OF THE DRAWINGS

Figure 1 is a perspective view schematically illustrating a structural example of an important part of a pseudo-sunlight irradiation apparatus according to Embodiment 1 of the present invention.
Figure 2 is a longitudinal cross sectional view schematically illustrating a structural example of an important part of the pseudo-sunlight irradiation apparatus in Figure **1****.**
Figure **3** is a perspective view illustrating a xenon light source, a reflector housing the xenon light source, and an aperture plate in the front in Figure **1****.**
Figure **4 (a)** is a longitudinal cross sectional view of a xenon light source, a reflector, an aperture plate, and a tapered light guiding member in Figure **1****.** Figure **4 (b)** is a plane view illustrating an aperture section of an aperture plate in Figure **3****.**
Figure **5 (a)** is a cross sectional view schematically illustrating a first structure of a tapered light guiding member for preventing stray light from entering an adjacent tapered light guiding member. Figure **5(b)** is a cross sectional view schematically illustrating a second structure of a tapered light guiding member for preventing stray light from entering an adjacent tapered light guiding member.
Figure **6** is a perspective view schematically illustrating an external appearance of a first structure of a tapered light guiding member in Figure **5(a)****.**
Figure **7** is a longitudinal cross sectional view schematically illustrating a light shielding member covering a halogen light source, a tapered light guiding member and a whole upper part of a wavelength selecting mirror.
Figure **8** is a plane view of a pseudo-sunlight irradiation apparatus in Figure **1****.**
Figure **9(a)** is a chart illustrating illuminance with respect to wavelength of xenon lamp. Figure **9(b)** is a chart illustrating illuminance with respect to wavelength of halogen lamp.
Figure **10 (a)** and **10(b)** are each a perspective view for further describing the adjustment of the amount of light of a pseudo-sunlight irradiation apparatus according to Embodiment 1.
Figure **11** is a perspective view schematically illustrating a structural example of an important part of a pseudo-sunlight irradiation apparatus according to Embodiment 2 of the present invention.
Figure **12** is a longitudinal cross sectional view schematically illustrating a structural example of an important part of a pseudo-sunlight irradiation apparatus in Figure **11****.**
Figure **13** is a plane view of a pseudo-sunlight irradiation apparatus in Figure **11****.**
Figures **14 (a)** and **14 (b)** are each a perspective view for further describing the adjustment of the amount of light of a pseudo-sunlight irradiation apparatus according to Embodiment 2.
Figure **15** is a longitudinal cross sectional view schematically illustrating a structural example of an important part of a conventional light irradiation apparatus disclosed in Patent Literature 1, illustrating a case where light is introduced from a lamp light source into a tapered light guiding member.
Figure **16** is a longitudinal cross sectional view schematically illustrating a structural example of another important part of a conventional light irradiation apparatus, illustrating a case where a lamp light source is housed within a reflector and light is introduced into a tapered light guiding member through an aperture section of an aperture plate placed in front of the reflector.
Figure **17** is a diagram illustrating stray light **L1** and **L2** with poor directivity escaping through openings in Figures **15** and **16****.** Figure **17 (a)** illustrates a light passing course of stray light passing through a tapered light guiding member without being trapped by the tapered light guiding member. Figure **17(b)** illustrates a light passing course of stray light propagating through a tapered light guiding member by being trapped within the tapered light guiding member, causing the directivity to be degraded.

### [Reference Signs List]

- **1, 1A**: pseudo-sunlight irradiation apparatus
- **2**: xenon light source
- **3a**: reflector
- **3b**: aperture plate
- **31**: aperture section
- **32**: light shielding member
- **4**: tapered light guiding member
- **41, 91**: light shielding member
- **42, 92**: light shielding member
- **5**: air mass filter (first optical filter; spectral adjusting filter)
- **6**: first light irradiation apparatus
- **7, 7A, 2C, 2D**: halogen light source
- **8, 8A, 3C, 3D**: reflector
- **9, 9C, 9D**: tapered light guiding member
- **93**: light shielding member (light shielding plate)
- **10, 10C, 10D**: air mass filter (second optical filter; spectral adjusting filter)
- **11**: second light irradiation apparatus
- **12**: light mixing section (wavelength selecting mirror)
- **13**: irradiation subject (solar panel)
- **14, 14A**: light guiding member
- **15**: third light irradiation apparatus
- **15A**: fourth light irradiation apparatus
- **L1, L2**: stray light

### BEST MODE FOR CARRYING OUT THE INVENTION

Hereinafter, Embodiments 1 and 2 will be described in detail, where a light irradiation apparatus according to the present invention is applied to a pseudo-sunlight irradiation apparatus and where the pseudo-sunlight irradiation apparatus is applied to a solar panel inspection apparatus, with reference to the accompanying figures. Note that the thicknesses, lengths, and the like of constituent elements in each of the figures are not limited to those of the illustrated structures in terms of the provided figures.

### (Embodiment 1)

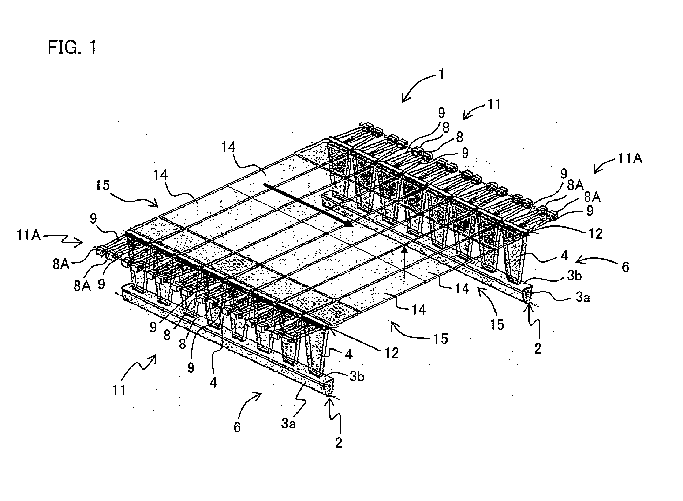

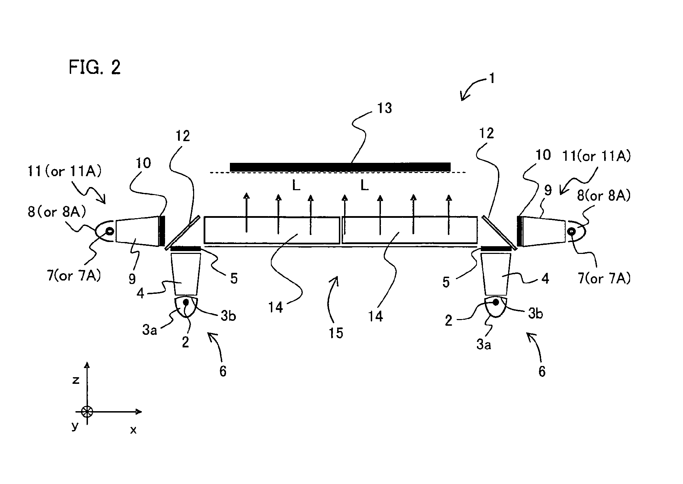

Figure **1** is a perspective view schematically illustrating a structural example of an important part of a pseudo-sunlight irradiation apparatus according to Embodiment 1 of the present invention. Figure **2** is a longitudinal cross sectional view schematically illustrating a structural example of an important part of the pseudo-sunlight irradiation apparatus in Figure **1****.**

In Figures **1** and **2****,** a pseudo-sunlight irradiation apparatus **1** according to Embodiment 1 is equipped with a first light irradiation apparatus **6.** The first light irradiation apparatus **6** comprises: a xenon light source **2** of a xenon lamp; a reflector **3a** for housing the xenon light source **2** therein, with an inner surface functioning as a reflection surface; an aperture plate **3b** for covering a front portion of the reflector **3a;** a tapered light guiding member **4** functioning as a tapered coupler for taking a xenon output light into a bottom end surface thereof and propagating the light through the inside to improve the directivity of the light, where the xenon output light comes from an aperture section (not shown) of the aperture plate **3b;** and an air mass filter **5** functioning as a first optical filter (spectral adjusting filter) for filtering the xenon light from the tapered light guiding member **4** to form a spectrum of pseudo-sunlight closer to short wavelength side. As such, in the first light irradiation apparatus **6,** an output light from the xenon light source **2** is reflected and gathered by the reflector **3a.** The xenon output light is then output from the aperture section of the aperture plate **3b,** and the xenon output light is taken into the bottom end surface of the tapered light guiding member **4,** referred to as a tapered coupler. The xenon output light is propagated through the inside to form parallel light with high directivity, and the xenon light with high directivity is output from the top end surface of the tapered light guiding member **4** through the air mass filter **5.** The xenon light from the air mass filter **5** corresponds to a spectrum of pseudo-sunlight closer to the short wavelength side.

The pseudo-sunlight irradiation apparatus **1** is also equipped with a second light irradiation apparatus **11.** The second light irradiation apparatus **11** comprises: a halogen light source **7** such as a halogen lamp; a reflector **8** for housing the halogen light source **7,** with an inner surface functioning as a reflection surface; a tapered light guiding member **9** for taking halogen output light reflected by the inner surface of the reflector **8** into the bottom end surface of the tapered light guiding member **9** and propagating the light through the inside to improve the directivity of the light; and an air mass filter **10** functioning as a second optical filter (spectral adjusting filter) for filtering the halogen light from an end surface of the tapered light guiding member **9** to form a spectrum of pseudo-sunlight closer to the longer wavelength side. As such, in second light irradiation apparatus **11,** the output light of the halogen light source **7** is reflected and gathered by the reflector **8.** The halogen output light is taken into one end surface of the tapered light guiding member **9** referred to as a tapered coupler, and the light is propagated through the inside to form parallel light with high directivity. Then the halogen light with high directivity is output from the other end surface of the tapered light guiding member **9** through the air mass filter **10** for adjusting a spectrum. The halogen light from the air mass filter **10** corresponds to a spectrum of pseudo-sunlight closer to the longer wavelength side. The halogen light source **7** may be a one-filament type halogen lamp; however, a two-filament type halogen lamp is used for the halogen light source **7** herein to gain more power, and the tapered light guiding member **9** is used in conjunction with two halogen lamps.

The pseudo-sunlight irradiation apparatus **1** is further equipped with a third light irradiation apparatus **15.** The third light irradiation apparatus **15** comprises: a light mixing section **12,** such as a wavelength selecting mirror (or a wavelength mixing mirror), functioning as reflection and transmission means for reflecting xenon output light of shorter wavelength from the air mass filter **5** to adjust a spectrum of the first light irradiation apparatus **6,** and transmitting halogen output light of longer wavelength from the air mass filter **10** to adjust a spectrum of the second light irradiation apparatus **11,** to mix the light and obtain pseudo-sunlight which is similar to sunlight; and a light guiding member **14** for taking pseudo-sunlight, which is diffused light from the light mixing section **12,** into one end surface and propagating the light through the inside to emit light **L** with high directivity uniformly as area irradiation onto an irradiation subject **13** such as a solar panel. Further, as illustrated in Figure **2****,** the third light irradiation apparatus **15** is placed on either the left or right side, and the respective light guiding members **14** touch each other at respective end surfaces thereof.

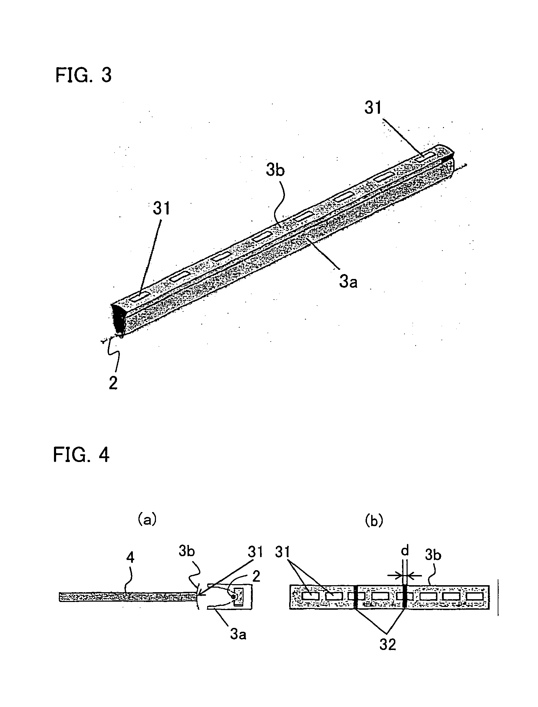

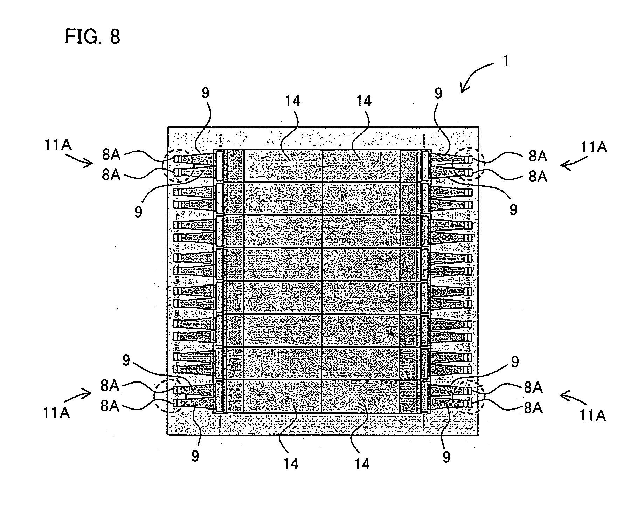

Figure **3** is a perspective view illustrating a xenon light source **2,** a reflector **3a** for housing the xenon light source **2,** and an aperture plate **3b** in front of the reflector **3a** in Figure **1****.** Figure **4(a)** is a longitudinal cross sectional view of a xenon light source **2,** a reflector **3a,** an aperture plate **3b,** and a tapered light guiding member **4** in Figure **1****.** Figure **4(b)** is a plane view illustrating an aperture section of an aperture plate **3b** in Figure **8****.**

As illustrated in Figures **3 ,4 (a)** and **4 (b)****,** provided are the reflector **3a** for reflecting and gathering output light from the xenon light source **2,** and the aperture plate **3b** in front of the reflector **3a.** Aperture sections **31** are formed at a predetermined interval in the aperture plate **3b.** The configuration is such that xenon light with favorable directivity is taken into the aperture section **31** and is allowed to enter the bottom end surface of the tapered coupler, which is the light guiding member **4.** As the size of the aperture section **31** becomes larger, a larger amount of irradiation light can enter the bottom end surface of the tapered light guiding member **4.** Further, a line-shaped (thin rectangle) light shielding member **32** with a predetermined width **d** can be attached to the aperture section **31** of the aperture plate **3b.** When the light shielding member **32** is attached on the aperture section **31** of the aperture plate **3b,** the light is shielded, and thus, a lower amount of irradiation light is allowed to enter the bottom end surface of the tapered light guiding member **4,** which enables light amount adjustment for increasing the degree of spectrum correspondence. If a light amount adjusting member is used for light immediately after the output from the air mass filter **5** for adjusting a spectrum, to perform a light amount adjustment, the conditions of the spectrum will be changed. Thus, the position for the light shielding member **32** and the light amount adjusting member is desirably placed at a position with the least influence on the spectrum, i.e., in between the bottom end surface of the tapered light guiding member **4** and the aperture plate **3b** in front of the reflector **3a.**

Thus, when the balance of the amount of output light from light guiding members **14** and **14** for area irradiation, to be described later, is adjusted, the amount of light can be changed independently of the conditions of an optical system in the middle for allowing the light to enter the light guiding members **14.** Specifically, even after the spectral distribution of pseudo-sunlight is fixed, the amount of light from the light guiding members **14** and **14** can be adjusted without changing the spectral distribution of pseudo-sunlight.

Here, the inventors found the following: when the spectral distribution of pseudo-sunlight was reproduced with high accuracy as pseudo-sunlight in order to perform a quality inspection of a solar panel, the cause of the disturbance of the spectral distribution of pseudo-sunlight irradiated onto the solar panel as the irradiation subject **13** was due to stray light with poor directivity escaping through an opening between the light source side and the end surface side of the tapered light guiding member and entering an adjacent tapered light guiding member through its side surface. In order to prevent stray light from entering an adjacent tapered light guiding member through its side surface, a light shielding member is placed in between, for example, an opening between the xenon light source **2** and the bottom end surface side of the tapered light guiding member **4,** and an adjacent tapered light guiding member **4.**

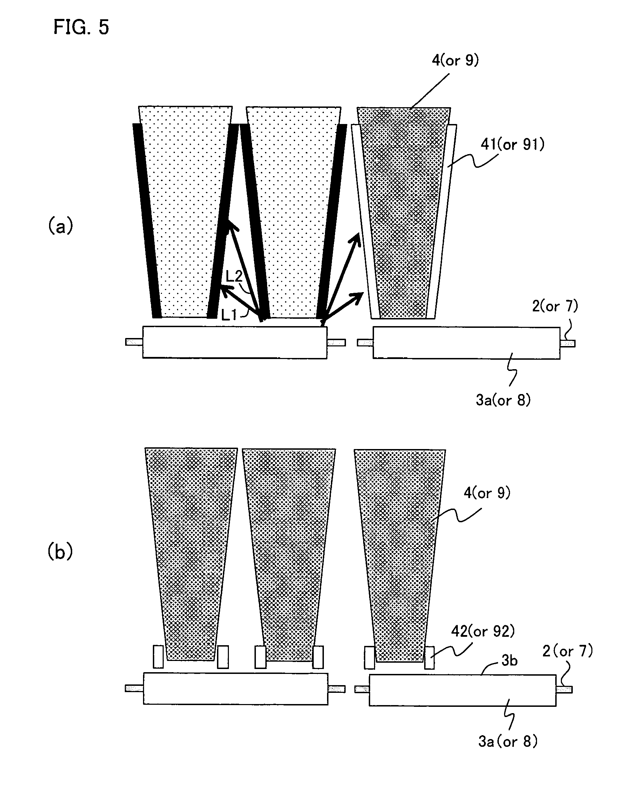

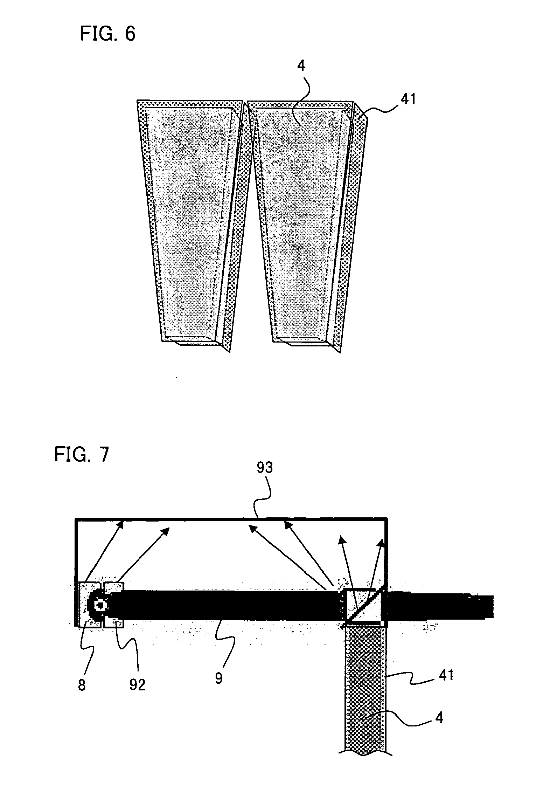

Figure **5(a)** is a cross sectional view schematically illustrating a first structure of a tapered light guiding member for preventing stray light from entering an adjacent tapered light guiding member. Figure **5(b)** is a cross sectional view schematically illustrating a second structure of a tapered light guiding member for preventing stray light from entering an adjacent tapered light guiding member. Figure **6** is a perspective view schematically illustrating the first structure of the tapered light guiding member in Figure **5 (a)** **.** While the lamp light source **2** of a xenon lamp and the reflector **3a** are provided in a plural number and all together in Figure **1****,** they are configured for every adjacent two sets in Figures **5 (a)** and **5(b).** The lamp light source **2** and reflector **3a** can take various structures. Further, the first structure and the second structure can be applied to the tapered light guiding member **9** for halogen light.

In the first light irradiation apparatus **6,** a circumferential side surface, other than an upper end surface and a lower end surface, of the tapered light guiding member **4,** which is a tapered coupler for increasing directivity of xenon output light, is covered with an independent light shielding member **41** as in Figures **5(a)** and **6****.** The periphery (side wall) of the tapered light guiding member **4** is surrounded by the light shielding member **41** as illustrated. Thus, even if stray lights **L1** and **L2** with poor directivity, escaping through the opening in between the bottom end surface of the tapered light guiding member **4** and the aperture section of the aperture plate **3b,** irradiates the light shielding member **41,** the light shielding member **41** prevents light from entering the inside the tapered light guiding member **4** through the side surface, reflecting off a wavelength selecting mirror of the light mixing section **12,** and entering a light guiding plate **14** side as stray light **L2,** as happens conventionally.

Alternatively, a light shielding member **42** projects from the circumference of one end surface of a tapered light guiding member towards a light source in such a manner to surround the one end surface, in order to prevent light from the light source from being stray light when taken into the one end surface of the tapered light guiding member. Specifically, in the first light irradiation apparatus **6,** the light shielding member **42** may be placed in such a manner to surround and cover the opening in between the bottom end surface of the tapered light guiding member **4,** which is a tapered coupler for increasing the directivity of xenon output light, and the aperture plate **3b** facing the reflector **3a.** Moreover, the light shielding member **42** may be placed on the circumferential side of a transverse cross section shape of the tapered light guiding member **4,** where a light shielding wall is provided in the direction of an adjacent light guiding member as in Figure **5 (b)** **.** Further, a circular member may be provided by connecting light shielding walls in such a manner to surround the opening. By the light shielding member **42** blocking the opening in between the bottom end surface of the tapered light guiding member **4** and the aperture section of the aperture plate **3b** facing the reflector **3a,** the stray lights **L1** and **L2** with poor directivity escaping from the opening in between the bottom end surface of the tapered light guiding member **4** and the aperture section of the aperture plate **3b** irradiate the inner surface of the circular light shielding member **42.** This prevents light from entering the inside the tapered light guiding member **4** through the side surface, reflecting off a wavelength selecting mirror of the light mixing section **12,** and entering a light guiding plate **14** side as stray light **L2,** as happens conventionally manner.

On the other hand, with regard to stray light on the side closer to the halogen light source **7,** a circumferential side surface of the tapered light guiding member **9,** other than one end surface and the other end surface thereof, for increasing directivity of halogen output light may be covered with an independent light shielding member **91** as in Figures **5 (a)** and **6.** However, since halogen light can heat, the temperature increases. Thus, it is better to cover the periphery as little as possible. On the side of the halogen light source **7,** it tends to be hot when the light shielding ratio is high. Thus, the light shielding ratio is set to be low on the side of the halogen light source **7.** The light shielding ratio of the light shielding member, placed in between adjacent tapered light guiding members **9** for increasing the directivity of the output light from the halogen light source **7,** is set to be lower than the light shielding ratio of the light shielding member placed in between adjacent tapered light guiding members **4** for increasing the directivity of the output light from the xenon light source **2.** As a result, the temperature increase of members due to absorption of halogen light reflected by the light shielding member can be prevented. For this reason, it is better for the reflection from the light shielding member to be as little as possible.

Thus, in the second light irradiation apparatus **11,** it is better to provide a light shielding member **92** than to provide a light shielding member **91** that covers the whole side surface, with respect to heat. The light shielding member **92** is a light shielding wall provided on the side of at least an adjacent light guiding member as in Figure **5(b)****,** on the circumferential side of a transverse cross section shape of the tapered light guiding member **9** in such a manner to cover the circumferential portion of the opening in between one end surface of the tapered light guiding member **9,** which is a tapered coupler for increasing the directivity of halogen output light, and the opening side of the reflector **8.** Since the light shielding member **92** surrounds only the circumferential portion of the opening in between the one end surface of the tapered light guiding member **9** and the opening side of the reflector **8** as illustrated, the stray lights **L1** and **L2** with poor directivity escaping from the opening in between the one end surface of the tapered light guiding member **9** and the opening side of the reflector **8,** irradiate the inner surface of the light shielding member **92** of a light shielding wall provided on the side of an adjacent light shielding member. This prevents light from being taken into the inside the tapered light guiding member **9** from the side surface thereof, propagating to a wavelength selecting mirror of the light mixing section **12,** and entering inside a light guiding plate **14** as stray light **L2,** as happens conventionally.

Stray light is most likely to be directed above a wavelength selecting mirror. Thus, as illustrated in Figure **7****,** a light shielding member (light shielding plate **93**) for covering all of the halogen light source **7,** tapered light guiding member **9** functioning as a tapered coupler, and wavelength selecting mirror of the light mixing section **12** can be provided at some distance from them, thus reducing the temperature increase near the taper coupler and light source due to infrared light to be stray light. Since the inner surface of the light shielding plate **93** is on the side closer to the halogen light source **7,** the reflection ratio is set to be low.

The light shielding members **41** and **91** are a sheet or a light shielding seal material attained by applying surface texturing to an aluminum plate with black anodized treatment, which has a low reflection ratio. These materials are adhered to the side facing a tapered light guiding member (the side closer to the circumferential wall surface of the tapered light guiding member) of a member that retains the tapered light guiding member **4** or **9.** For the light shielding members **42** and **92,** a sheet or a light shielding material of an aluminum plate with surface texturing may be adhered in such a manner as to cover only the portion of the opening between the light source side and the end surface side of the tapered light guiding member **4** or **9,** which is on the side closer to the light guiding member. Alternatively, a frame-like light shielding member (a rectangle or round shape in accordance with the cross section of the light guiding member) may be fixed only to the circumferential side of the opening. Further, the material for the light shielding plate **93** may be a material of an aluminum plate with black anodized treatment, which has a low reflection ratio, with surface texturing applied thereto.

Next, unitization with a freely changeable irradiation area will be described.

As illustrated in Figure **1****,** the pseudo-sunlight irradiation apparatus **1** according to Embodiment 1 comprises a plurality of groups, each group of said plurality comprising a first light irradiation apparatus **6,** second light irradiation apparatus **11** and third light irradiation apparatus **15,** each group of said plurality being provided for either the left or right side. In Embodiment 1, eight sets (sixteen units) of them are provided in an array. The group of the first light irradiation apparatus **6,** second light irradiation apparatus **11** and third light irradiation apparatus **15** are unitized with one another, so that they can be manufactured accurately. Units of the first light irradiation apparatus **6,** second light irradiation apparatus **11** and third light irradiation apparatus **15** can be combined together to have the size of an irradiation area for pseudo-sunlight corresponding to a desired size of solar panel. Thus, the two groups on either side with each group constituted of the first light irradiation apparatus **6,** second light irradiation apparatus **11** and third light irradiation apparatus **15** are not limited to the eight sets (sixteen units) in the forward and backward direction. As a result, the unitization of a unit pseudo-sunlight irradiation apparatus capable of freely changing an irradiation area is actualized. In this case, since the xenon light source **2,** reflector **3a,** and aperture plate **3b** are all in one irradiation course, they are used together. These xenon light source **2,** reflector **3a,** and aperture plate **3b** may also be provided for each tapered light guiding member **4.**

As described above, the unitization of the group of the first light irradiation apparatus **6,** second light irradiation apparatus **11** and third light irradiation apparatus **15** as a unit makes it possible to suppress variation in irradiation intensity on an irradiation area of a unit and accurately obtain desired irradiation intensity (light amount). Even when a unitized unit of an irradiation area is combined with another to form a larger irradiation area, variation in irradiation intensity can be suppressed in such a large irradiation area as a whole to obtain desired uniform irradiation intensity (light amount). In summary, although it may be difficult to make the irradiation intensity of a large irradiation area uniform with accuracy, the irradiation intensity (light amount) of a large irradiation area can accurately be made uniform by dividing a large irradiation area into a plurality of areas, making the irradiation intensity of each of the small irradiation areas uniform with accuracy, and simply combining the areas together.

Thus, the group of the first light irradiation apparatus **6,** second light irradiation apparatus **11** and third light irradiation apparatus **15** is formed as a unit and the unit is manufactured such that irradiation intensity (light amount) of the unit is highly accurate. When the unit is assembled in accordance with the size of a solar panel, it will not be necessary to adjust the light amount for irradiation intensity (light amount), which has been conventionally performed and takes a lot of time. Specifically, it has conventionally been necessary to measure which parts of a whole large irradiation area have low irradiation intensity, using an irradiation intensity inspection apparatus with reference irradiation detection cells provided at important points in accordance with the size of a solar panel, and to adjust the portions with low irradiation intensity in order to increase the irradiation intensity. With the present invention, such work will not be necessary. Further, such adjustment of irradiation intensity is not necessary during periodic maintenance. Accurate manufacturing of a unit of a unitized light irradiation apparatus without variation makes the adjustment of irradiation intensity unnecessary, and such a light irradiation apparatus is excellent for maintenance. In the past, it took a long time to adjust such irradiation intensity (to adjust a light amount) of a whole irradiation area.

Next, the adjustment of irradiation intensity (adjustment of a light amount) of a whole irradiation area will be further described.

Figure **8** is a plane view of a pseudo-sunlight irradiation apparatus **1** in Figure **1****.**

With the group of a first light irradiation apparatus **6,** a second light irradiation apparatus **11** and a third light irradiation apparatus **15** as a unit, two such groups are provided for the left and right sides respectively, and eight sets of the units are provided in the forward and backward direction.

In the pseudo-sunlight irradiation apparatus **1** according to Embodiment 1, the group of a first light irradiation apparatus **6,** a second light irradiation apparatus **11** and a third light irradiation apparatus **15** are unitized, and two such groups are provided for the left and right side respectively, and, for example, eight sets (two units each on the left and right sides respectively constitute a set; sixteen units in total) are provided in an array in the forward and backward direction. The unit can comprise a replaceable lamp with a different output light amount or a replaceable air mass filter **5** (spectral adjusting filter) with a different light transmittance, so that at least irradiation intensity (light amount) of light entering the light guiding plate **14** can be individually adjusted.

Next, a solar panel inspection apparatus will be described, which is capable of accurately examining the quality of the amount of electricity generation obtained by uniform area-irradiation of pseudo-sunlight onto a solar panel.

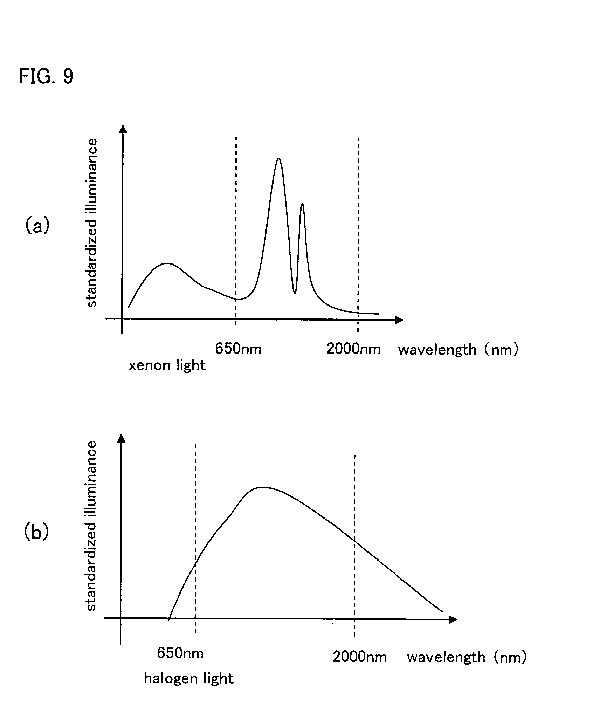

Figure **9(a)** is a chart illustrating illuminance with respect to a wavelength of a xenon lamp. Figure **9(b)** is a chart illustrating illuminance with respect to a wavelength of a halogen lamp.

Output light from a xenon lamp, as illustrated in Figure **9(a)****,** has a lower heat ray component contributing to an increase in the temperature when compared to halogen light, and mainly has light of a range of wavelengths corresponding to the range of visible light to ultraviolet light of sunlight. Output light from a halogen lamp, as illustrated in Figure **9(b)****,** has light of a range of wavelengths of infrared light of sunlight, which contains a large amount of heat ray components contributing to an increase in the temperature. By mixing respective output lights from the xenon lamp and the halogen lamp through the light mixing section **12,** pseudo-sunlight similar to sunlight can be obtained. The pseudo-sunlight is guided from the light mixing section **12,** such as a wavelength selecting mirror, into the light guiding members **14** and **14,** and the pseudo-sunlight is propagated, so that a light directing section formed in the light guiding member allows light with high directivity to irradiate uniformly as area irradiation onto an irradiation subject **13** (solar panel).

Accordingly, whether or not the irradiation subject **13**, or solar panel, has a prescribed amount or more of electricity generation can be detected by an electricity generation detecting apparatus, thus performing the quality inspection of the irradiation subject **13** (e.g., solar panel). The solar panel inspection apparatus is attained with the pseudo-sunlight irradiation apparatus **1** and electricity generation detecting apparatus.

According to Embodiment 1 with the structure described above, as the pseudo-sunlight irradiation apparatus **1** for emitting pseudo-sunlight, a small range of wavelengths as in the xenon light source **2** is used, and further, a light source with high energy light of a large range of wavelengths and a light of a range of wavelengths corresponding to the large range of wavelengths of sunlight as in the halogen light source **7** are used. Further, for a light shielding method for the tapered light guiding members **4** and **9** when a light source is also used with light that has a range of wavelengths that is larger than the above-mentioned one, the light shielding member is provided in between adjacent tapered light guiding members, resulting in preventing the stray light **L2** from entering an adjacent tapered light guiding member through the side surface thereof. Thus, this prevents the stray light **L2** with poor directivity, escaping from the aperture section **31** of the aperture plate **3b** for introducing the xenon light source **2,** from entering the tapered light guiding member **4** for the xenon light source **2,** going towards the air mass filter **5** thereabove, and being directed to the light guiding member **14,** and this prevents light with a poor degree of spectrum correspondence with sunlight due to the stray light **L2,** from being output to the irradiation subject **13,** or solar panel. Thus, an inspection for accurately measuring the output characteristics of a solar panel can be performed. Further, by performing the light shielding at the halogen light source **7** with a light shielding member smaller than that at the xenon light source **2,** or by changing the light shielding method as in Figure **7****,** an abnormal increase in the temperature due to the covering of the tapered light guiding member **9** for the halogen light source **7** is prevented; and an unfavorable influence of high heat in changing the spectral characteristics of a coating member on the inner surface of a reflection box, as happens conventionally, is prevented.

The light amount adjustment will be further described hereinafter.

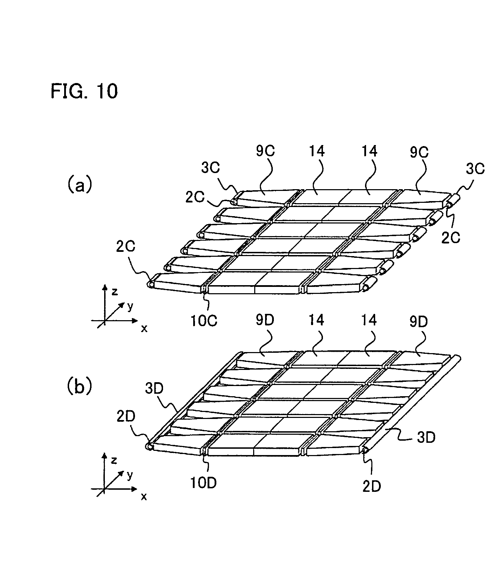

Figure **10(a)** is a perspective view for describing the light amount adjustment of a pseudo-sunlight irradiation apparatus **1** according to Embodiment 1. In Figure **10(a)****,** the first light irradiation apparatus **6** or light mixing section **12** (wavelength selecting mirror) in Figure **1** is not illustrated. For the light amount adjustment, it will be described with reference to Figure **10****,** and the first light irradiation apparatus **6** or light mixing section **12** (wavelength selecting mirror) need not be included. Similarly, the lamp light source and reflector can take any structure.

As illustrated in Figure **10(a)****,** respective light guiding members **14** and light source lamps **2C** are paired one-to-one, and some lamps are exchanged or the electric current is adjusted, so that the amount of light output from the light source lamps **2C** can be individually controlled. In this case, by replacing air mass filters **10C** (spectral adjusting filter) with those having different light transmittance, the amount of light entering respective light guiding members **14** can also be adjusted. In the case of such adjustment with regard to the pseudo-sunlight irradiation apparatus **1** according to Embodiment 1, lamps of the xenon light source **2** and halogen light source 7 can be replaced and the electric current can be adjusted, so that the amount of light output from the light source lamps can be individually controlled. Further, the air mass filter **5** and air mass filter **10** can be replaced with air mass filters with different light transmittance, so that the amount of light entering respective light guiding members **14** can also be adjusted.

Although not particularly described in Embodiment 1, a member for fixing the tapered light guiding member **4** and a member for fixing the tapered light guiding member **9** are provided. The light shielding member is attached to a surface facing the tapered light guiding member **4** and/or the tapered light guiding member **9** of the member for fixing the tapered light guiding member **4** and/or the member for fixing the tapered light guiding member **9.**

Also, although not particularly described in Embodiment 1, reflectors **3a** and **8** are included, each of which houses the light source **2** or **7** and reflects output light from the light source **2** or **7** in a predetermined direction. The light shielding members **42** and **92** are placed in such a manner to shield the light of at least an area facing another adjacent tapered light guiding member of a space in between the aperture section side of each reflector **3a** or **8** and an end surface of the first light guiding member.

### (Embodiment 2)

In Embodiment 1, the case has been described where the third light irradiation apparatuses **15** are placed on the left and right sides, and light guiding members **14** are in contact with each other at their end surfaces. In Embodiment 2, a case will be described where light guiding members **14** on the left and right sides are integrated with each other so that the third light irradiation apparatuses **15** on the left and right sides in Embodiment 1 are also integrated with each other.

Specifically, in Embodiment 1, the case has been described where, as the pseudo-sunlight irradiation apparatus **1**, a first light irradiation apparatus **6**, a second light irradiation apparatus **11,** and a third light irradiation apparatus **15** are unitized as a set; the unitized sets are placed facing each other in the left and right direction; and a plurality of two such units, in which the other end surfaces of the respective third light guiding members **14** and **14** of the third light irradiation apparatus **15** touch each other, are placed in an array in the forward and backward direction in accordance with the size of the irradiation subject **13.** In Embodiment 2, a case will be described where, as a pseudo-sunlight irradiation apparatus **1A to be** described below, a fourth light guiding member **14A** is provided in between a left side set with a first light irradiation apparatus **6,** a second light irradiation apparatus **11,** and a light mixing section **12** arranged therein and a right side set with a first light irradiation apparatus **6,** a second light irradiation apparatus 11, and a light mixing section **12** arranged therein for taking mixed light from the mixing section **12** on the left side into one end surface and allowing the light to propagate through the inside thereof, and for taking mixed light from the mixing section **12** on the right side into the other end surface and allowing the light to propagate through the inside thereof, to emit light with high directivity uniformly as area light from a flat surface onto an irradiation subject **13.** They are unitized as a set, and a plurality of the unitized sets are placed in an array in the forward and backward direction in accordance with the size of the irradiation subject.

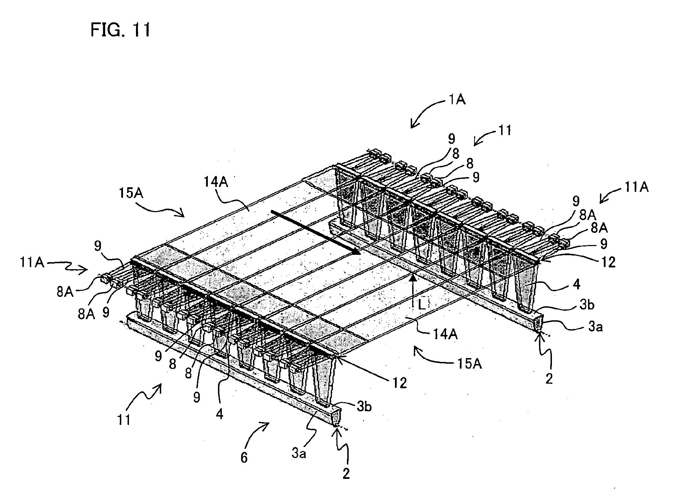

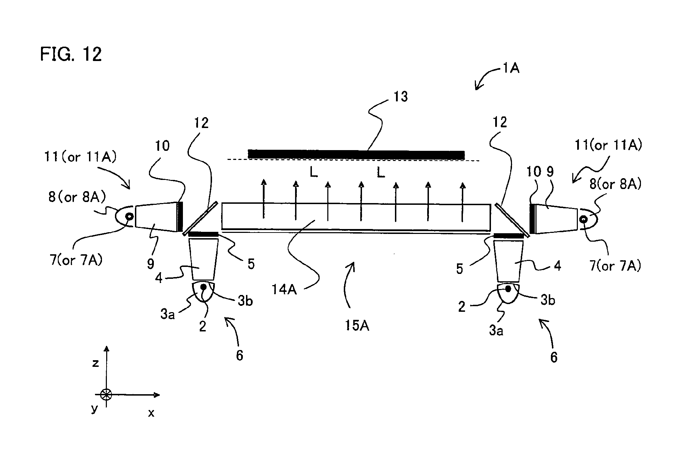

Figure **11** is a perspective view schematically illustrating a structural example of an important part of a pseudo-sunlight irradiation apparatus according to Embodiment 2 of the present invention. Figure **12** is a longitudinal cross sectional view schematically illustrating a structural example of an important part of a pseudo-sunlight irradiation apparatus in Figure **11****.** Note that in Figures **11** and **12****,** the same reference numerals are provided for those structural members which have the same functional effects as those in Figures **1** and **2****.**

In Figures **11** and **12****,** while a pseudo-sunlight irradiation apparatus **1A** according to Embodiment 2 comprises the same configuration as the first light irradiation apparatus **6** and the second light irradiation apparatus **11** (or **11A**) in Embodiment 1, the pseudo-sunlight irradiation apparatus **1A** is different in that a first light irradiation apparatus **6** and a second light irradiation apparatus **11** (or **11A**) on the left side and a first light irradiation apparatus **6** and a second light irradiation apparatus **11** (or **11A**) on the right side are used as a unit. Further, instead of the configuration of the third light irradiation apparatus **15** in Embodiment 1, a fourth light irradiation apparatus **15A** will be used. In summary, the pseudo-sunlight irradiation apparatus **1A** according to Embodiment 2 is different from the case of the pseudo-sunlight irradiation apparatus **1** according to Embodiment 1, in that the apparatus uses the light guiding member **14A** in which the light guiding members **14** according to Embodiment 1 on the left and right sides are integrated with each other. Thus, the fourth light irradiation apparatus **15A,** in which two light irradiation apparatuses **15** on the left and right sides are integrated with each other, is used.

The fourth light irradiation apparatus **15A** comprises: a mixing section **12** on the left side, such as a wavelength selecting mirror (or a wavelength mixing mirror) as a reflection and transmission means for reflecting xenon output light of a shorter wavelength from an air mass filter **5** to adjust a spectrum of a first light irradiation apparatus **6** on the left side and for transmitting halogen output light of a longer wavelength from an air mass filter **10** to adjust a spectrum of a second light irradiation apparatus **11** on the left side, to mix the light and obtain pseudo-sunlight similar to sunlight; a mixing section **12** on the right side, such as a wavelength selecting mirror (or a wavelength mixing mirror) as a reflection and transmission means for reflecting xenon output light of a shorter wavelength from an air mass filter **5** to adjust a spectrum of a first light irradiation apparatus **6** on the right side and for transmitting halogen output light of a longer wavelength from an air mass filter **10** to adjust a spectrum of a second light irradiation apparatus **11** on the right side, to mix the light and obtain pseudo-sunlight similar to sunlight; and a light guiding member **14A** for taking the pseudo-sunlight, which is diffusion light from the mixing section **12** on the left side, into one end surface and allowing the light to propagate through the inside thereof, and taking the pseudo-sunlight, which is diffusion light from the mixing section **12** on the right side, into the other end surface and allowing the light to propagate through the inside thereof, to emit light **L** with high directivity uniformly as area irradiation onto an irradiation subject **13,** such as, for example, a solar panel. In this case, in the fourth light irradiation apparatus **15A,** the light guiding member **14A** is formed in an integrated form.

The light guiding member **14A** can use light more efficiently than if the light guiding member **14A** was divided into two light guiding members **14** and **14** as in Embodiment 1 since there is no reflection of light at the end surfaces therebetween. Further, in the method for arraying the light guiding members as in Embodiment 1, when light is reflected off the other end surface, the use of a reflection mirror will have an unfavorable influence on the spectra. On the other hand, the light guiding member **14A** does not need to be divided into two light guiding members **14** and **14** on the left and right as in Embodiment 1. Thus, there is no light adjusting necessary at the middle end surfaces, and the spectral characteristics can be maintained favorable. When the light guiding member **14A** is made of glass material, the manufacturing of the light guiding member **14A** will be more difficult as the area becomes larger. However, such glass material can be optimally applied to a light guiding member **14A** with a relatively small area.

Next, unitization with a freely changeable irradiation area will be described.

As illustrated in Figure **11****,** the pseudo-sunlight irradiation apparatus **1A** according to Embodiment 2 comprises first light irradiation apparatuses **6** on the left and right sides, second light irradiation apparatuses **11** on the left and right sides and a fourth light irradiation apparatus **15A,** all of which are configured as a unit. In Embodiment 2, eight sets of such unit are provided in an array in the forward and backward direction without a space in between. The first light irradiation apparatuses **6** on the left and right sides, the second light irradiation apparatuses **11** on the left and right sides and the fourth light irradiation apparatus **15A** can be unitized as a unit, which allows the unit to be accurately manufactured. The first light irradiation apparatuses **6** on the left and right sides, the second light irradiation apparatuses **11** on the left and right sides and the fourth light irradiation apparatus **15A** are combined in the forward and backward direction as a unit, so that the size of an irradiation surface of pseudo-sunlight corresponding to a desired size of a solar panel can be obtained. Thus, a unit of the first light irradiation apparatuses **6** on the left and right sides, the second light irradiation apparatuses **11** on the left and right sides and the fourth light irradiation apparatus **15A** is not limited to the case of such eight units in the forward and backward direction. Thereby, the unitization with a freely changeable irradiation area can be achieved. In this case as well, since the xenon light source **2,** reflector **3a,** and aperture plate **3b** are all in one irradiation course, they are used together. The xenon light source **2,** reflector **3a,** and aperture plate **3b** may also be provided for each tapered light guiding member **4.**

As described above, the unitization of the first light irradiation apparatus **6** on the left and right sides, second light irradiation apparatus **11** on the left and right sides and fourth light irradiation apparatus **15A** as a unit makes it possible to suppress variation in irradiation intensity on an irradiation area of a unit and accurately obtain desired irradiation intensity (light amount). Even when a unitized unit of an irradiation area is combined with another to form a larger irradiation area, variation in irradiation intensity can be suppressed with such a large irradiation area as a whole to obtain desired uniform irradiation intensity (light amount) . In summary, although it may be difficult to make the irradiation intensity of a large irradiation area uniform with accuracy, the irradiation intensity (light amount) of a large irradiation area can be accurately made uniform by dividing a large irradiation area into a plurality of areas, making the irradiation intensity of each of the small irradiation areas uniform with accuracy, and merely combining the areas together.

Thus, the first light irradiation apparatus **6** on the left and right sides, second light irradiation apparatus **11** on the left and right sides and fourth light irradiation apparatus **15A** are formed as a unit and the unit is manufactured such that irradiation intensity (light amount) of the unit is highly accurate. When the unit is assembled in accordance with the size of a solar panel, it will not be necessary to adjust the light amount for irradiation intensity (light amount), as has been done conventionally, taking a lot of time. Further, such adjustment of irradiation intensity is not necessary during periodic maintenance. Accurate manufacturing of a unit of unitized light irradiation apparatus without the variation makes the adjustment of irradiation intensity unnecessary, and such a light irradiation apparatus is excellent for maintenance. In the past, it took a long time to adjust such irradiation intensity (to adjust a light amount) of a whole irradiation area.

Next, the adjustment of irradiation intensity (adjustment of a light amount) of a whole irradiation area will be further described.

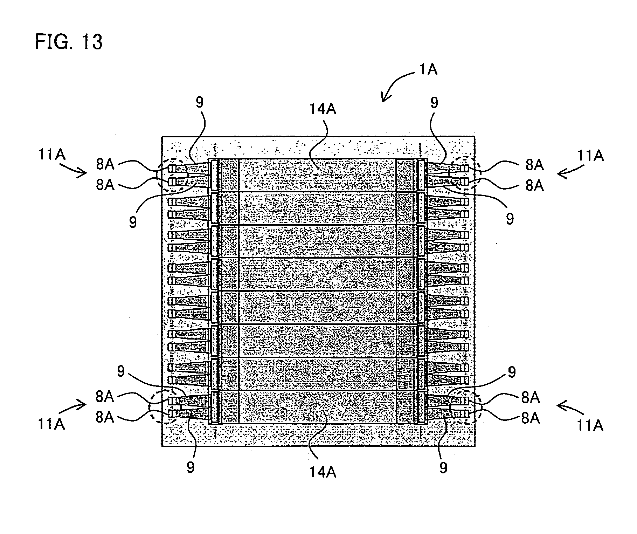

Figure **13** is a plane view of a pseudo-sunlight irradiation apparatus **1A** in Figure **11****.**

The first light irradiation apparatuses **6** on the left and right sides, the second light irradiation apparatuses **11** on the left and right sides and the fourth light irradiation apparatus **15A** constitute a unit, and eight sets of such a unit are provided in the forward and backward direction. Since the amount of light output from reflectors on both ends (the closest one and the farthest one) in the forward and backward direction shows a tendency to be less, as illustrated in the plane view of Figure **13****,** similar to the case of the plane view in Figure **8****,** the amount of light output from reflectors on both ends is increased herein more than that at the other parts closer to the center portion so that the amount of irradiation light can be uniform. At both ends in the forward and backward direction, a halogen light source **7A** can be used, which is a little larger than the halogen light source **7.**

In the pseudo-sunlight irradiation apparatus **1A** according to Embodiment 2, the second light irradiation apparatuses **11** on the left and right sides and the fourth light irradiation apparatus **15A** are unitized, and eight such units are provided in an array in the forward and backward direction. At least the unit can comprise a replaceable lamp with a different output light amount or a replaceable air mass filter 5 (spectral adjusting filter) with a different light transmittance, so that irradiation intensity (light amount) of light entering the light guiding plate **14A** can be individually adjusted. By providing an attachment section for either the halogen light source **7** previously mentioned or the halogen light source **7A,** which has a higher amount of output light, light sources with different amounts of output light may be replaceable.

Further, similarly to the case of Embodiment 1, in order to prevent stray light from entering an adjacent tapered light guiding member **4** or **9** through its side surface, a light shielding member is placed in between, for example, an opening between the xenon light source **2** and the bottom end surface side of the tapered light guiding member **4,** and an adjacent tapered light guiding member **4.** For example, as illustrated in Figure **5(a)****,** a light shielding member **41** is placed around the tapered light guiding member **4,** so that stray light **L1** and **L2** with poor directivity, escaping through the opening in between the bottom end surface of the tapered light guiding member **4** and the aperture section of the aperture plate **3b,** irradiates the light shielding member **41.** Thus, this prevents light from entering the inside the tapered light guiding member **4** through the side surface, reflecting off a wavelength selecting mirror of the light mixing section **12,** and entering a light guiding plate **14** side as stray light **L2,** as happens conventionally. Alternatively, a ring-shaped light shielding member **42** with a predetermined height of a light shielding wall is placed on the side facing an adjacent light guiding member as in Figure **5(b)** for example, on the circumference side, in a transverse cross-sectional shape, of the tapered light guiding member **4** in such a manner to cover the opening in between the bottom end surface of the tapered light guiding member **4** and a aperture plate **3b** facing a reflect **3a.** Thus, stray light **L1** and **L2** with poor directivity, escaping through the opening in between the bottom end surface of the tapered light guiding member **4** and the aperture section of the aperture plate **3b,** irradiates the inner surface of the ring-shaped light shielding member **42;** this prevents light from entering the inside the tapered light guiding member **4** entering through the side surface, reflecting off a wavelength selecting mirror of the light mixing section **12,** and entering a light guiding plate **14** side as stray light **L2.**

Although not particularly described in Embodiment 2, similarly to the case of Embodiment 1, when the balance of the amount of output light from the light guiding member **14A** for area irradiation is adjusted, only the amount of light is changed, without changing the conditions of an optical system in the middle for allowing the light to enter the light guiding members **14A** through both sides. Specifically, even after the spectral distribution of pseudo-sunlight is fixed, the amount of output light from the light guiding member **14A** can be adjusted without changing the spectral distribution of pseudo-sunlight.

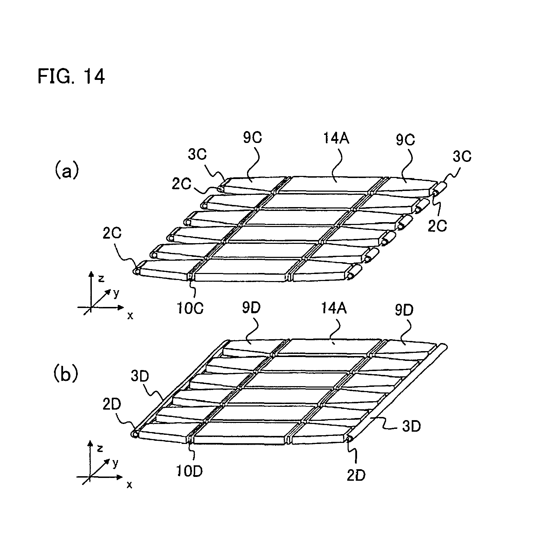

Although not specifically described in Embodiment 2, similarly to the case in Embodiment 1, as illustrated in Figure **14(a)****,** a light guiding member **14A** and a light source lamps **2C** are paired one-to-one, and some lamps are exchanged or the electric current is adjusted, so that the amount of light output from the light source lamps **2C** can be individually controlled. In this case, as a matter of course, by replacing air mass filters 10C (spectral adjusting filter) with those having different light transmittance, the amount of light entering the light guiding member **14A** can also be adjusted. In the case of such adjustment with regard to the pseudo-sunlight irradiation apparatus **1A** according to Embodiment 2, lamps of the xenon light source **2** and halogen light source **7** can be replaced and the electric current can be adjusted, so that the amount of light output from the light source lamps can be individually controlled. Further, the air mass filter **5** and air mass filter **10** can be replaced with air mass filters with different light transmittance, so that the amount of light entering the light guiding member **14A** can also be adjusted.

Further, as illustrated in Figure **14(b)****,** the light guiding member **14A** may be in one irradiation course without being divided, similar to a light source lamp **2D,** and the transmittance of each filter may be individually controlled by replacing only the air mass filter **10D** (spectral adjusting filter). Alternatively, the light amount entering the light guiding member **14A** can be suppressed and adjusted by adding a light transmission filter, other than an air mass filter **10D** (spectral adjusting filter), as a correction filter for controlling transmittance. This is not applicable to the pseudo-sunlight irradiation apparatus **1A** according to Embodiment 2; on the contrary, the xenon light source **2** and reflector **3a,** or the halogen light source **7** and reflector **8** of the pseudo-sunlight irradiation apparatus **1A** according to Embodiment 2 can be formed in one irradiation course as illustrated in Figure **14 (b)** **.**

In Embodiments 1 and 2, the pseudo-sunlight irradiation apparatus **1** or **1A** has been described, in which: a plurality of sets of a first light irradiation apparatus **6,** a second light irradiation apparatus **11** and a third light irradiation apparatus **15** or **15A** are provided; first tapered light guiding members **4** are adjacently arrayed with one another and second tapered light guiding members **9** are adjacently arrayed with one another; and a light shielding member is placed in between the adjacent tapered light guiding members **4** and/or the adjacent tapered light guiding members **9.** However, without being limiting, such a pseudo-sunlight irradiation apparatus may be that comprising an area-irradiating light guiding member **14** or **14A** for taking into one end surface pseudo-sunlight from either of the first light irradiation apparatus **6** or the second light irradiation apparatus **11,** allowing the light to propagate through the inside thereof, and emitting the light with high directivity uniformly as area irradiation onto an irradiation subject **13.** In this case, the light guiding member of either of the first light irradiation apparatus **6** or the second light irradiation apparatus **11** includes a light shielding member placed thereon for shielding light, so that stray light will not enter the circumferential wall other than the one end surface and the other end surface of the tapered light guiding member. The light shielding member may be attached to or coil around the surface of the circumferential wall of the tapered light guiding member. Alternatively, the light shielding member may protrude from the periphery of one end surface of a tapered light guiding member towards the light source in such a manner as to surround the one end surface, so as to prevent light from a light source from escaping and being stray light when taken into one end surface of a tapered light guiding member. In this case, the light shielding member is placed in such a manner as to surround the opening in between the aperture section side of a reflector and the tapered light guiding member, or the light shielding member is placed in such a manner to surround the opening in between an aperture section of an aperture plate and one end surface of the tapered light guiding member.

Although not particularly described in Embodiments 1 or 2, the air mass filter **5,** functioning as a first optical filter, is constituted of a plurality of filters, for adjusting the spectrum of the xenon light source **2,** and one of the filters is a reflection mirror that reflects only near infrared light, and further, a light shielding member **41** or **42** is placed to cover surfaces, other than the surfaces which allow light to enter or exit, of the tapered light guiding member **4** that increases the directivity of the output light from the xenon light source **2.** Thereby, stray light due to near infrared light reflection can be prevented.

Although not particularly described in Embodiment 1 or 2, a light shielding member in one piece is provided on the side closer to the halogen light source **7,** for shielding light by covering the halogen light source **7,** the tapered light guiding member **9,** and the air mass filter **10** functioning as a second optical filter for adjusting the spectra of the halogen light source **7.** The light shielding member used on the side closer to the halogen light source **7** is set such that the reflection ratio of light in the range of wavelengths of 600 nm to 1100 nm entering the light shielding member is less than 1%. As a result, the negative influence on the degree of spectrum correspondence with sunlight can be decreased. Further, the light shielding member used on the side closer to the halogen light source **7** is set such that the reflection ratio of light in the range of wavelengths of 1100 nm to 2500 nm entering the light shielding member is less than 1%.

As described above, the present invention is exemplified by the use of its preferred Embodiments 1 and 2. However, the present invention should not be interpreted solely based on Embodiments 1 and 2 described above. It is understood that the scope of the present invention should be interpreted solely based on the claims. It is also understood that those skilled in the art can implement an equivalent scope of technology, based on the description of the present invention and common knowledge from the description of the detailed preferred Embodiments 1 and 2 of the present invention. Furthermore, it is understood that any patent, any patent application and any references cited in the present specification should be incorporated by reference in the present specification in the same manner as the contents are specifically described therein.

### INDUSTRIAL APPLICABILITY

The present invention can be applied in the field of a light irradiation apparatus for emitting light with high directivity to a subject to be irradiated, a pseudo-sunlight irradiation apparatus for emitting pseudo-sunlight onto the subject to be irradiated using the light irradiation apparatus, and a solar panel inspection apparatus for measuring an output characteristic of a solar panel to determine a quality, using the pseudo-sunlight irradiation apparatus. According to the present invention, a light shielding member is placed in between adjacent first light guiding members and/or adjacent second light guiding members, so that the degradation of directivity performance due to stray light with poor directivity, entering and propagating through the tapered light guiding members, can be prevented, and thus the decrease in the degree of spectrum correspondence with sunlight can be prevented.

## Claims

1. A light irradiation apparatus comprising:
a light source;
a light guiding member for taking output light from the light source into one end surface and outputting light with increased directivity from another end surface thereof; and
an optical filter for adjusting a spectrum of the light output from the other end surface of the light guiding member, wherein the light guiding member includes a light shielding member placed so that stray light will not enter a circumferential wall but only the one end surface and the other end surface.

2. A light irradiation apparatus according to claim 1, wherein the light shielding member protrudes from a circumferential end of the one end surface of the light guiding member towards the light source, in such a manner to surround the one end surface.

3. A light irradiation apparatus according to claim 1, further comprising a reflector for housing the light source and reflecting the output light from the light source towards a predetermined direction, wherein the light shielding member is placed in such a manner to surround an opening in between the side closer to an aperture section of the reflector and the one end surface of the light guiding member.

4. A pseudo-sunlight irradiation apparatus comprising an area-irradiating, light guiding member for taking pseudo-sunlight from the light irradiation apparatus according to any of claims 1 to 3 into the one end surface, allowing the pseudo-sunlight to propagate through the inside of the light guiding member, and emits light with high directivity uniformly as area irradiation from a flat surface onto an irradiation subject.

5. A pseudo-sunlight irradiation apparatus comprising a plurality of sets provided therein of:
a first light irradiation apparatus comprising: a first light source; a first light guiding member for taking output light from the first light source into one end surface and outputting the light with increased directivity from another end surface thereof; and a first optical filter for adjusting a spectrum of the light output from the other end surface of the first light guiding member;
a second light irradiation apparatus comprising: a second light source; a second light guiding member for taking output light from the second light source into one end surface and outputting the light with increased directivity from another end surface thereof; and a second optical filter for adjusting a spectrum of the light output from the other end surface of the second light guiding member; and
a third light irradiation apparatus comprising: a light mixing member for mixing light from the first light irradiation apparatus and light from the second light irradiation apparatus to obtain pseudo-sunlight similar to sunlight; and a third light guiding member for taking the pseudo-sunlight from the light mixing member, into one end surface, allowing the pseudo-sunlight to propagate through the inside thereof and emitting light with high directivity onto an irradiation subject from a flat surface thereof uniformly as area irradiation,
wherein the first light guiding members all together are arrayed adjacently and the second light guiding members all together are arrayed adjacently, and
wherein a light shielding member is placed in between the adjacent first light guiding members and/or the adjacent second light guiding members.

6. A pseudo-sunlight irradiation apparatus according to claim 5, further comprising: a member for fixing the first light guiding member; and a member for fixing the second light guiding member,
wherein the light shielding member is attached to a surface facing the first light guiding member and/or the second light guiding member, of the member for fixing the first light guiding member and/or the member for fixing the second light guiding member.

7. A pseudo-sunlight irradiation apparatus according to claim 5, further comprising reflectors for housing the first light source and the second light source respectively and reflecting output light from the first light source and the second light source respectively in a predetermined direction, wherein the light shielding member is placed in such a manner to shield light of at least an area facing another adjacent light guiding member, of a space in between an aperture section side of each of the reflectors and one end surface of the first light guiding member.

8. A solar panel inspection apparatus for measuring an output characteristic of a solar panel to determine quality, using the pseudo-sunlight irradiation apparatus according to claim 4.

9. A solar panel inspection apparatus for measuring an output characteristic of a solar panel to determine quality, using the pseudo-sunlight irradiation apparatus according to any of claims 5 to 7.
